# FASCICULE DE BREVET EUROPEEN

(11) **EP 1 385 444 B1**
(45) Date de publication et mention de la délivrance du brevet: **13.08.2008**
(21) Numéro de dépôt: 02738213.4
(22) Date de dépôt: 06.05.2002
(51) Int. Cl.: A61C 13/00

(54) **PROCEDE DE PRISE D'EMPREINTE POUR LA REALISATION D'UNE PROTHESE DENTAIRE ET ARCHITECTURE D'APPAREILLAGES POUR SA MISE EN OEUVRE**
VERFAHREN ZUR ABDRUCKNAHME FÜR DIE HERSTELLUNG EINER ZAHNPROTHESE, SOWIE DIE GERÄTEZUSAMMENSTELLUNG FÜR DIE DURHFÜHRUNG
METHOD FOR OBTAINING AN IMPRESSION FOR PRODUCING A DENTAL PROSTHESIS AND INSTRUMENTATION ARCHITECTURE THEREFOR

(30) Priorité: 07.05.2001 FR 0106067
(43) Date de publication de la demande: 04.02.2004
(73) Titulaire: Medcom, 59000 Lille (FR)
(72) Inventeur: BENADDI, Amar, F-59000 Lille (FR)
(74) Mandataire: Fosse, Danièle
(86) Numéro de dépôt international: PCT/FR2002/001545
(87) Numéro de publication internationale: WO 2002/089695

(56) Documents cités:
- DE-A- 19 518 702
- US-A- 5 131 844

## Description

L'invention concerne un procédé de prise d'empreinte numérique pour la réalisation d'une prothèse dentaire.

L'invention concerne encore une architecture d'appareillages pour la mise en oeuvre d'un tel procédé.

Dans le cadre de l'invention, le terme "prothèse dentaire" doit être compris dans son sens le plus général. Il concerne toutes sortes de prothèses proprement dites, telles que couronnes, "onlay", facettes, etc., ainsi que tous autres dispositifs similaires.

Dans l'art connu, l'élaboration d'une prothèse dentaire s'effectue classiquement selon les étapes rappelées ci-dessous.

Lé dentiste prend une empreinte de la cavité buccale d'un patient une fois son travail de soin terminé. Le principe de cette prise d'empreinte dite "en bouche" est tout à fait analogue à celui de l'antiquité égyptienne : des empreintes étaient prises avec de l'argile. Selon la technologie contemporaine, on utilise généralement des silicones, des matériaux plastiques ou des alginates, matériau proche du plâtre.

En effet, cette empreinte, une fois réalisée, doit être coulée en plâtre le plus tôt possible pour préserver les caractéristiques tridimensionnelles de la cavité buccale du patient. On va essayer ensuite de reconstituer celle-ci avec du plâtre dans le laboratoire de prothèses. Ce modèle en plâtre est primordial car toutes les autres étapes de l'élaboration de la prothèse en dépendent et reposent sur cette maquette appelée "maître modèle".

Habituellement, celui-ci doit être remanié plusieurs fois, en particulier découpé à des endroits précis pour obtenir des portions du modèle dénommé "die". Ce "die" va être utilisé comme support pour confectionner l'armature d'une couronne ou "chape", selon le principe de la cire perdue. Ensuite une étape de mise en revêtement est effectuée. Une fois cette chape constituée, en dehors des cas de couronnes réalisées totalement en métal et qui sortent quasiment finies après l'étape de revêtement, le prothésiste va monter soit de la résine, soit de la céramique par appositions successives de couches de céramique qui sont cuites dans un four adapté. Ce montage de céramique va prendre environ une heure, ce qui doit être comparé à toutes les étapes précédentes qui s'étalent typiquement sur plusieurs jours dans la pratique des laboratoires classiques.

Depuis la prise d'empreinte en bouche jusqu'au montage de la céramique sur chape, on réalise aisément qu'il s'ajoute successivement des erreurs relatives inhérentes à chacune des étapes. Ceci constitue notamment une source de problèmes entre le praticien dentiste et le prothésiste. Il est en effet courant que ceux-ci se renvoient la responsabilité de l'inadaptation éventuelle des prothèses en bouche. Le prothésiste expliquant qu'il a travaillé d'après l'empreinte et donc, s'il y a problème, celui-ci est dû à l'empreinte, le dentiste répondant que son empreinte est bonne et, si tel n'était pas le cas, il ne fallait pas débuter le travail sur une empreinte non satisfaisante.

Même dans le cas de bonne adaptation de la prothèse en bouche, il existe toujours, dans la pratique, des retouches aussi minimes soient-elles. Ceci est la preuve que la chaîne de fabrication classique de la prothèse, selon l'art connu, présente des points à revoir.

Pour cette raison, et pour tenter d'obvier aux inconvénients précités, des procédés de fabrication de prothèses mécanisés suivant une technique dite "CFAO" ("Conception de Fabrication Assistée par Ordinateur") se sont développés. Ces procédés sont basés sur la scanérisation, par procédé optique, laser ou la combinaison des deux, voire même à l'aide d'un palpeur, du "maître modèle" envoyé par le prothésiste. Celui-ci a été confectionné de façon classique, toujours à partir d'une empreinte en bouche. Il continue donc de présenter, au moins en partie, les inconvénients de cette technique.

Il existe un autre procédé, théoriquement très intéressant, mais qui ne peut être utilisé que pour des cas très limités de prothèse : couronne unitaire, facette, "onlay" (c'est une obturation qui remplace l'obturation amalgame classique dénommée "plombage"). Ce procédé consiste à prendre une empreinte optique directement en bouche, puis de confectionner ces types de prothèse directement par "CFAO", donc d'usinage de plot de céramique mono-teinte.

Il subsiste cependant un problème. Dans la quasi-totalité des cas, l'empreinte optique en bouche ne donne pas de bons résultats. Ceci est dû à divers facteurs : salive sécrétée par le patient, ouverture de bouche insuffisante, etc. Finalement, le dentiste est contraint d'effectuer une empreinte classique au silicone ou autre et à la couler avec du plâtre, puis à en faire l'empreinte optique pour réaliser la couronne. Ces caractéristiques montrent les limites de ce procédé.

En conclusion de ce qui précède, es techniques de confection de prothèse dentaire selon l'art connu, comme par exemple divulgué dans DE 195 18702 restent finalement très empiriques, car on passe par une succession d'étapes non parfaitement contrôlées à chaque stade de leur réalisation.

Les procédés plus récents mis en oeuvre en laboratoire de prothèse, bien que très performants du fait de la technologie utilisée de scanérisation des maîtres modèles préalablement à la fabrication de la chape de la couronne et usinage selon les procédés de "CFAO", restent cependant tributaires des empreintes réalisées en bouche par le dentiste. Ils ne sont pas exempts, en tout
ou partie, des inconvénients liés à ces étapes de réalisation.

L'invention se fixe pour but un procédé numérique de prise d'empreinte pour la réalisation d'une prothèse dentaire visant à pallier les inconvénients des dispositifs de l'art connu, et dont certains viennent d'être rappelés.

Le procédé selon l'invention permet notamment de ne plus devoir recourir à la prise d'empreintes par le dentiste, et sa coulée en plâtre par le prothésiste, sources principales d'erreurs et nécessitant des ré-itérations longues, et finalement coûteuses.

Pour ce faire, selon une première caractéristique importante, une prise d'empreinte radio-numérique est effectuée en faisant appel à des rayons X.

De façon plus précise, une fois son travail de soin terminé, le praticien dentiste va pouvoir prendre des empreintes numériques en utilisant, soit un scanner médical s'il exerce dans un établissement de soins qui en dispose à d'autres fins ou un pseudo scanner (par exemple du type mis dans le commerce sous la marque "NEWTOM°", marque déposée). Un tel appareil peut être installé dans une pièce de dimensions typiques 3 x 3 mètres, voire moins. Il s'ensuit qu'il peut être installé dans la majorité des cabinets dentaires. De façon plus générale, on utilisera un appareil générateur de rayons X de type scanner, c'est-à-dire permettant d'obtenir une tomographie.

Par le procédé selon l'invention, on peut obtenir directement un fichier numérique sur lequel figurent les dents préparées pour les couronnes, avantageusement à l'échelle 1 - 1. Il n'existe plus de déformation possible de l'empreinte, comme dans le cas des procédés selon l'art connu, avec usage de silicones ou d'alginates. Il n'est plus besoin non plus de couler l'empreinte avec du plâtre. Un modèle d'étude peut être obtenu par stéréolithographie après conversion des formats de fichiers en un format approprié, avantageusement au format connu du type ".STL".

Le procédé reste cependant compatible avec les méthodes de travail du prothésiste. En effet, celui-ci, après réception du modèle d'étude ainsi fabriqué peut continuer à travailler comme il le faisait initialement pour confectionner sa chape, puis sa couronne.

Il n'existe plus alors de problème potentiel entre dentiste et prothésiste quant à l'origine de la responsabilité de l'erreur, car l'empreinte radio-numérique ne dépend pas de l'habilité du dentiste et le modèle réalisé par stéréolithographie est le reflet exact de la bouche du patient. Donc des erreurs, si elles existent, ne peuvent être imputables qu'aux étapes successives pour obtenir la chape.

Pour supprimer ces inconvénients, selon une caractéristique supplémentaire avantageuse du procédé selon l'invention, il est possible de transmettre les fichiers radio-numériques directement à une machine-outil de "CFAO". Une conversion des fichiers numériques au format de cette machine permet de "court-circuiter" l'étape de scanérisation des maîtres modèles, étape toujours nécessaire dans l'art connu.

Un système de traitement de données numériques à programme enregistré, par exemple un micro-ordinateur, coopère avantageusement avec un logiciel spécialisé de conception de prothèse et reçoit les fichiers numériques précités. Celui-ci permet de concevoir la prothèse recherchée et pilote la machine d'usinage pour la fabrication de la prothèse. Celle-ci peut être indifféremment, comme il a été indiqué, une couronne métallique, une couronne céramique mono-teinte, une facette mono-teinte, un "onlay", etc. Ces prothèses peuvent être envoyées directement au dentiste.

S'il s'agit d'une chape, métallique ou céramique, celle-ci doit être envoyée préalablement au prothésiste pour personnaliser la dent en montant une céramique, ce qui lui prend typiquement une heure pour la finir, laps de temps à comparer à plusieurs jours, comme il est actuellement nécessaire.

L'utilisation de rayons X présentent de nombreux autres avantages et parmi lesquels :
- ils permettent d'obtenir une précision remarquable, pour les prothèses dentaires les précisions obtenues sont typiquement situées entre 30 et 50 micromètres ;
- les nouveaux instruments radiologiques réalisent des clichés numériques, à partir desquels des fichiers numériques sont générés directement ;
- il n'est donc plus nécessaire de mettre en oeuvre une machine de développement et d'utiliser des liquides de développement nocifs pour l'environnement, ce en dehors du coût économique de tels procédés ;
- la prise des clichés est très rapide : elle peut ne prendre que quelques secondes, ce contrairement aux empreintes classiques qui prennent au minimum quelques minutes avec le risque supplémentaire de devoir recommencer si empreintes du patient ne sont pas réussies ou si celui-ci est pris de nausées du fait des produits utilisés ; et
- une fois les conditions d'acquisitions réglées, les cliches radiologiques sont tout à fait reproductibles et la qualité du cliché ne dépend pas de la personne qui l'a pris.

On doit aussi ajouter que les doses de rayons X sont, compte tenu de la technologie utilisée et des temps d'acquisition de l'ordre de quelques secondes, tout à fait non dommageables pour les patients.

Enfin, les rayons X ne sont pas polluants envers l'environnement et sont tout à fait inoffensifs pour le patient avec les machines numériques de nouvelle génération.

En résumé de ce qui précède, on constate que, dans certains cas, il n'existe quasiment plus de manipulation physique humaine entre la prise d'empreinte radio-numérique et le placement de la prothèse en bouche du patient par le dentiste. C'est notamment le cas pour tout ce qui concerne la partie postérieure de la cavité buccale à compter des prémolaires. En d'autres termes, c'est le cas lorsque l'aspect esthétique ne prime pas en regard de l'aspect purement fonctionnel.

Par contre pour tout le secteur antérieur de la bouche, secteur que l'on pourra appeler du "sourire", l'intervention du prothésiste peut s'avérer nécessaire, notamment pour personnaliser des couronnes. Le prothésiste pourra donc se consacrer exclusivement à cette partie de sa pratique que l'on peut qualifier "d'artistique", sans se préoccuper de toutes les étapes précédentes, étapes dont il est déchargé. Cela représente donc pour le prothésiste un gain de temps significatif, une économie de fonctionnement et une meilleure productivité de son unité de fabrication.

L'invention a donc pour objet principal un procédé de prise d'empreinte dans une zone comprise dans la sphère maxillo-faciale d'un patient pour la réalisation d'une prothèse et/ou d'un dispositif dit "maître modèle", caractérisé en ce que ladite empreinte est une empreinte radio-numérique réalisée à l'aide d'un appareil générateur de rayons X et en ce qu'il comprend au moins des étapes subséquentes de génération d'un fichier de données numériques à partir de ladite empreinte et de réalisation, basée sur lesdites données contenues dans ledit fichier numérique, de ladite prothèse et/ou dudit dispositif "maître modèle".

L'invention a encore pour objet une architecture d'appareillages pour la mise en oeuvre de ce procédé.

L'invention va maintenant être décrite de façon plus détaillée en se référant aux dessins annexés, parmi lesquels :

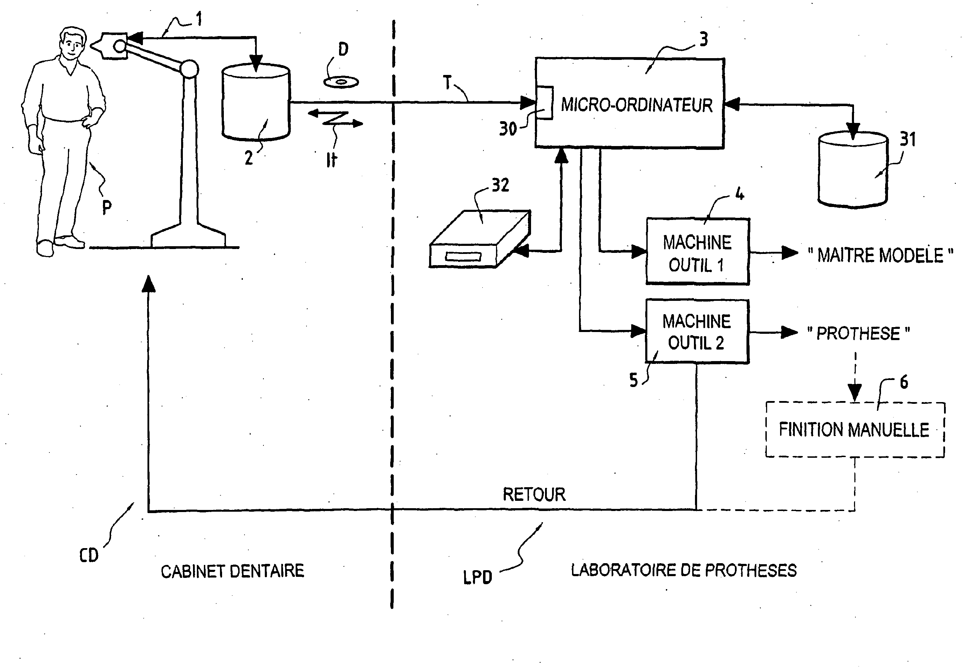

- la figure 1 illustre très schématiquement les principales étapes du procédé numérique de prise d'empreinte et de réalisation d'une prothèse dentaire, selon un mode préféré de l'invention, et montre la répartition des tâches entre un cabinet dentaire dans lequel la prise d'empreinte est effectuée et un laboratoire de prothèses dentaires dans lequel la réalisation de la prothèse est réalisée.

Par référence à la figure 1, on va tout d'abord décrire les principales étapes du procédé selon l'invention qui s'effectuent, *a priori,* dans le cabinet dentaire CD.

La première étape, selon une caractéristique principale de l'invention, consiste en la prise d'une empreinte radio-numérique de la cavité buccale du patient P, une fois le travail de soin dit "en bouche" fini.

L'empreinte radio-numérique peut être réalisée par un dentiste ou son assistante dentaire (non représentés sur la figure). Elle est effectuée à l'aide d'un appareil générateur de rayons X, sous la référence générale 1, du type scanner médical ou du type dit "pseudo-scanner", comme précédemment indiqué. De tels appareils sont bien connus en soi. Ils sont utilisés dans d'autres secteurs de la médecine. Il est donc inutile de les décrire plus avant. En général, le patient doit se rendre dans une pièce annexe dans laquelle se trouve l'appareil 1 générateur de rayons X.

La deuxième étape comprend la génération d'un fichier numérique 2.

De façon avantageuse, on peut obtenir directement le fichier numérique 2 en sortie de l'appareil 1 générateur de rayons X, fichier sur lequel figurent des dents préparées, par exemple pour la pose d'une couronne, ce préférentiellement à l'échelle. 1 - 1.

Lors d'une troisième étape, le fichier numérique 2 ainsi constitué est transmis à laboratoire de prothèses dentaires ou de façon plus générale un centre de fabrication de telles prothèses, sous la référence générale *LPD.* Il peut être transmis sous des modes divers et notamment sous les deux modes principaux ci-dessous.

Un premier mode de transmission possible est la voie télématique, dans le sens général de ce terme : modem, transmission par un réseau local, par un réseau Internet ou par un réseau intranet reliant des cabinets dentaires et un ou plusieurs laboratoires de prothèses dentaires, etc. On a représenté ce mode de transmission de façon symbolique par la référence générale *It.*

Selon un deuxième mode de transmission possible, on enregistre tout d'abord le fichier sur un support matériel : disquette, bande, CD-ROM (à lecture seule, par exemple de type "CD-R", ou réinscriptible, par exemple de type "CD-RW"), etc. Le support enregistré est transmis par des voies classiques : courrier, porteur, etc. On a représenté ce mode de transmission de façon symbolique par la référence générale *D*.

On va maintenant décrire les principales étapes du procédé selon l'invention qui s'effectuent, *a priori,* dans laboratoire de prothèses dentaires *LPD.*

Dans un mode de réalisation préféré, le fichier 2 est reçu par une ligne de transmission télématique *T* connectée à un micro-ordinateur 3, ou, de façon plus générale, à un système de traitement de données numériques à programme enregistré, via un modem 30 par exemple. Le micro-ordinateur 3 peut traiter les données reçues, c'est-à-dire le fichier 2, immédiatement ou les stocker pour un usage ultérieur dans une mémoire de masse 31. Il comprend par ailleurs divers organes classiques, tant internes (processeur, etc.), qu'externes (périphériques divers tels qu'écran, clavier, souris, etc.).

Ces organes, bien connus en soi, n'ont pas été représentés sur la figure1, à l'exception d'un lecteur de support enregistré, symbolisé par un lecteur de disquettes 32. Ce dernier sert notamment à la lecture du fichier 2, lorsque celui-ci est enregistré sur un support *D*. Il va de soit que la nature exacte du lecteur 32 dépend du support *D* à lire : lecteur de CD-ROM, de bandes, etc. On prévoit avantageusement plusieurs types de lecteurs.

Le micro-ordinateur 3 peut enregistrer un ou plusieurs programme(s) spécifique(s) sous la forme de logiciel(s) spécialisé(s) de conception de prothèse, avantageusement sur un disque dur : mémoire de masse 31. De façon avantageuse, des programmes de conversion de formats de fichiers sont également implémentés dans le micro-ordinateur 3. Ces programmes permettent de convertir, en tant que de besoin, le format initial du fichier 2 reçu, en un format approprié à la commande de machines outils qui vont être précisées ci-après.

En effet le fichier au nouveau format, en co-opération avec les programmes spécialisés précités, va commander, selon les cas, soit une première machine outil 4, d'usinage d'un "maître modèle", soit une seconde machine outil 5, d'usinage d'une prothèse proprement dite.

Deux cas peuvent se présenter:

Le premier cas concerne une prothèse que l'on qualifiera "d'esthétique" ou destinée au secteur antérieur (dents participant au sourire) d'un patient à traiter.

Une chape, métallique ou céramique, est tout d'abord réalisée. Cette chape ainsi réalisée est prise en charge par le prothésiste (non représenté) qui personnalise une ou plusieurs dents définitives. Ceci est effectué par la pose de céramique, par le modelage de celle-ci, par un dégradé de couleur, par un rendu d'une certaine saturation et d'une certaine luminosité.

Cette étape est symbolisée par la référence 6 (traitement manuel) sur la figure 1.

Le second cas concerne une prothèse que l'on qualifiera de "non esthétique" ou destinée au secteur postérieur de la bouche d'un patient à traiter.

La prothèse peut être définitivement fabriquée par usinage (machine outil 5) et renvoyée directement au dentiste expéditeur des fichiers radio-numériques 2. Dans ce cas, II n'y a eu quasiment pas d'intervention humaine depuis la prise d'empreinte radio-numérique (appareil 1 générateur de rayons X) jusqu'à la réalisation de la couronne.

Le procédé selon l'invention reste aussi compatible avec les méthodes de travail traditionnelles d'un laboratoire de prothèses. Pour les prothésistes qui désirent continuer à travailler artisanalement d'après un "maître modèle" et élaborer eux-mêmes la chape et les finitions éventuelles, il est possible, dés réception des fichiers radio-numériques 2, de fabriquer un maître modèle par stéréo-lithographie.

Bien que jusqu'à ce stade de la description, seule la fabrication de prothèses proprement dites, dans le sens large qui a été donné à ce terme, a été explicitement décrites. Il est cependant possible d'envisager d'autres applications du procédé selon l'invention. Une application importante est la confection de "maîtres modèles" (machine outil 4) en vue de leur utilisation dans le cadre de la réhabilitation maxillo-faciale, en particulier dans le domaine de l'occlusodontie avec pathologie des articulations temporo-mandibulaire. Dans ce cas, on créé un "articulateur physiologique personnalisé" aux besoins du patient à traiter.

Dans l'état actuel de la technique, il n'existe, pour représenter une articulation de mâchoires, que des appareillages qui essaient de les simuler de façon plus ou moins précise, et de façon plus ou moins compliquée. Leur coût financier peut atteindre typiquement plusieurs milliers de francs, voire plusieurs dizaines de milliers de francs. A titre d'exemple non exhaustif, de tels systèmes sont développés par la société "FAG DENTAIRE", sous la marque "QUICK master".

Le procédé conforme à l'invention, en tant qu'il reconstitue l'articulation des deux mâchoires et ces mâchoires mêmes, permet d'obtenir, non plus une simulation plus ou moins rapprochée de cette articulation, mais exactement cette articulation avec tous les mouvements qu'elle peut réaliser et constitue par-là même ce qui vient d'être appelé "articulateur personnalisé".

Ceci a donc des applications dans le domaine des conceptions de prothèses de quelque nature qu'elles puissent être, mais également des dispositifs, et ce qui est une caractéristique avantageuse, utilisables dans le domaine du rétablissement de l'occlusion, en particulier des troubles de l'articulation temporo-mandibulaire.

A la lecture de ce qui précède, on constate aisément que l'invention atteint bien les buts qu'elle s'est fixés.

Le procédé selon l'invention présente de nombreux avantages qui ont été rappelés et notamment la possibilité de court-circuiter l'étape longue et coûteuse de scanérisation d'un "maître modèle".

Il doit être clair cependant que l'invention n'est pas limitée aux seuls exemples de réalisations explicitement décrits, notamment en relation avec la figure 1. Le laboratoire de prothèses peut notamment disposer de plus de deux machines outils.

Enfin, les exemples numériques n'ont été fournis que pour mieux fixer les idées et ne sauraient constituer une quelconque limitation de la portée de l'invention. Ils procèdent d'un choix technologique à la portée de l'Homme de Métier. Il en est de même en ce qui concerne les matériaux et organes précisément décrits.

## Revendications

1. Procédé de prise d'empreinte dans une zone comprise dans la sphère maxillo-faciale d'un patient pour la réalisation d'une prothèse et/ou d'un dispositif dit "maître modèle", **caractérisé en ce que** ladite empreinte est une empreinte radio-numérique réalisée à l'aide d'un appareil générateur de rayons X (1) de type scanner permettant d'obtenir une tomographie et **en ce qu'**il comprend au moins des étapes subséquentes de génération d'un fichier de données numériques (2) à partir de ladite empreinte et de réalisation, basée sur lesdites données contenues dans ledit fichier numérique (2), de ladite prothèse (5) et/ou dudit dispositif "maître modèle" (4).

2. Procédé selon la revendication 1, **caractérisé en ce qu'**il comprend une étape d'enregistrement dudit fichier de données numériques (2) sur un support d'enregistrement de données (*D*) et de sa transmission à un centre de fabrication (*LPD*) de ladite prothèse (5) et/ou dudit dispositif "maître modèle" (4).

3. Procédé selon la revendication 1, **caractérisé en ce qu'**il comprend une étape de transmission par un réseau télématique (*It*, *T*) dudit fichier de données numériques (2) à un centre de fabrication (*LPD*) de ladite prothèse (5) et/ou dudit dispositif "maître modèle" (4).

4. Procédé selon l'une des revendications 2 ou 3, **caractérisé en ce qu'**il comprend une étape d'enregistrement dudit fichier de données numériques (2) dans un système de traitement de données numériques à programmes enregistrés (3), une étape de conversion dudit fichier de données numériques (2) d'un premier format déterminé à un second format déterminé, sous la commande d'un programme enregistré dans ledit système de traitement de données à programmes enregistrés (3), ledit système enregistrant en outre au moins un programme spécifique coopérant avec lesdites données numériques pour commander au moins une machine outil de réalisation de ladite prothèse et/ou dudit dispositif "maître modèle".

5. Procédé selon l'une quelconque des revendications 1 à 4, **caractérisé en ce que** ladite prothèse est un articulateur physiologique personnalisé au dit patient.

6. Architecture d'appareillages pour la mise en oeuvre du procédé numérique de prise d'empreinte selon l'une quelconque des revendications 1 à 5, **caractérisé en ce qu'**elle comprend au moins un appareil générateur de rayons X (1), de manière à réaliser ladite prise d'empreinte et à générer ledit fichier de données numériques (2).

7. Architecture d'appareillages selon la revendication 6, **caractérisé en ce qu'**elle comprend des moyens de transmission télématiques (*It*, *T*) pour transmettre ledit fichier de données numériques (2) au dit centre de fabrication de ladite prothèse (5) et/ou dudit dispositif "maître modèle" (4).

8. Architecture d'appareillages selon la revendication 7, **caractérisé en ce qu'**elle comprend en outre, dans ledit centre de fabrication (LPD) de ladite prothèse (5) et/ou dudit dispositif "maître modèle" (4), un système de traitement de données numériques à programme enregistré (3) destiné à recevoir ledit fichier de données numériques (2) et à générer des commandes destinées à au moins une machine outil, lesdites commandes étant générées par la coopération desdites données numériques (2) et d'au moins un programme spécifique enregistré dans ledit système de traitement de données à programme enregistré (3).

9. Architecture d'appareillages selon la revendication 8, **caractérisé en ce qu'**elle comprend au moins deux machines outils, une première machine outil (4) étant destinée à la réalisation dudit "maître modèle" et une seconde machine outil (5) étant destinée à la réalisation de ladite prothèse.

## Claims

1. Method for taking an impression in an area lying within the maxillo-facial sphere of a patient for the production of a prosthesis and/or a device known as the "master model", **characterized in that** the said impression is a radio-digital impression produced with the aid of an X-ray generating device (1) of the scanner type allowing a tomogram to be obtained and **in that** it comprises at least subsequent steps of generating a digital data file (2) from the said impression and producing, based on the said data contained in the said digital file (2), the said prosthesis (5) and/or the said "master model" device (4).

2. Method according to Claim 1, **characterized in that** it comprises a step of storing the said digital data file (2) on a data storage medium (D) and transmission thereof to a manufacturing facility (LPD) for the said prosthesis (5) and/or the said "master model" device (4).

3. Method according to Claim 1, **characterized in that** it comprises a step of transmission of the said digital data file (2) via a telematic network (It, *T*) to a manufacturing facility (LPD) for the said prosthesis (5) and/or the said "master model" device (4).

4. Method according to one of Claims 2 or 3, **characterized in that** it comprises a step of storing the said digital data file (2) in a digital data processing system with stored programs (3), a step of conversion of the said digital data file (2) from a first specified format to a second specified format under the control of a program stored in the said data processing system with stored programs (3), the said system further storing at least one specific program cooperating with the said digital data in order to control at least one machine tool for producing the said prosthesis and/or the said "master model" device.

5. Method according to any one of Claims 1 to 4, **characterized in that** the said prosthesis is a physiological articulator customized for the said patient.

6. Equipment architecture for carrying out the digital method for taking an impression according to any one of Claims 1 to 5, **characterized in that** it comprises at least one X-ray generating device (1), in order to carry out the said taking of an impression and to generate the said digital data file (2).

7. Equipment architecture according to Claim 6, **characterized in that** it comprises telematic transmission means (*It*, *T*) for transmitting the said digital data file (2) to the said manufacturing facility for the said prosthesis (5) and/or the said "master model" device (4).

8. Equipment architecture according to Claim 7, **characterized in that** it further comprises, in the said manufacturing facility (*LPD*) for the said prosthesis (5) and/or the said "master model" device (4), a digital data processing system with stored program (3) intended to receive the said digital data file (2) and to generate commands intended for at least one machine tool, the said commands being generated by the cooperation between the said digital data (2) and at least one specific program stored in the said data processing system with stored program (3).

9. Equipment architecture according to Claim 8, **characterized in that** it comprises at least two machine tools, a first machine tool (4) being intended for the production of the said "master model" and a second machine tool (5) being intended for the production of the said prosthesis.

## Patentansprüche

1. Verfahren zur Abdrucknahme in einer Zone, die den maxillo-facialen Bereich eines Patienten einschließt, zur Herstellung einer Prothese und/oder einer Vorrichtung namens "Hauptmodell", **dadurch gekennzeichnet, dass** der Abdruck ein röntgen-numerischer-Abdruck ist, der mit Hilfe eines Apparates zum Erzeugen von Röntgenstrahlen (1) des Scannertyps hergestellt wird, der es erlaubt, eine Tomographie zu erhalten, und dass es wenigstens die aufeinanderfolgenden Phasen der Erzeugung einer numerischen Datei (2), ausgehend von dem Abdruck, und die Herstellung, basierend auf den Daten, die in der numerischen Datei (2) enthalten sind, der Prothese (5) und/oder der Vorrichtung "Hauptmodell" (4) aufweist.

2. Verfahren nach Anspruch 1, **dadurch gekennzeichnet, dass** es eine Phase der Erfassung der numerischen Datei (2) auf einem Speichermedium (D) und seine Übermittlung an ein Verarbeitungszentrum (LPD) der Prothese (5) und/oder der Vorrichtung "Hauptmodell" (4) aufweist.

3. Verfahren nach Anspruch 1, **dadurch gekennzeichnet, dass** es eine Phase der Übermittlung der numerischen Daten (2) an ein Verarbeitungszentrum (LPD) der Prothese (5) und/oder der Vorrichtung "Hauptmodell" (4) mittels eines telematischen Netzes (It, T) aufweist.

4. Verfahren nach einem der Ansprüche 2 oder 3, **dadurch gekennzeichnet, dass** es eine Phase der Einspeicherung der numerischen Datei (2) in ein System zur Bearbeitung der numerischen Daten mittels abgelegter bzw. gespeicherter Programme (3), eine Phase der Umwandlung der numerischen Datei (2) eines ersten bestimmten Formates in ein zweites bestimmtes Format, unter der Steuerung eines Programms, das in dem System der Bearbeitung der Daten mittels gespeicherter Programme (3) abgelegt bzw. gespeichert ist, aufweist, wobei das System außerdem wenigstens ein bestimmtes Programm aufweist, das mit den numerischen Daten zusammenwirkt, um wenigstens eine Werkzeugmaschine zur Herstellung der Prothese und/oder der Vorrichtung "Hauptmodell" (4) zu befehligen.

5. Verfahren nach einem der Ansprüche 1 bis 4, **dadurch gekennzeichnet, dass** die Prothese eine bezüglich des Patienten personalisierter, physiologischer Artikulator ist.

6. Apparatearchitektur zur Ausführung des numerischen Verfahrens zur Abdrucknahme gemäß einem der Ansprüche 1 bis 5, **dadurch gekennzeichnet, dass** sie wenigstens einen Apparat zur Erzeugung von Röntgenstrahlen (1) aufweist, um die Abdrucknahme durchzuführen und die numerische Datei (2) zu erzeugen.

7. Apparatearchitektur nach Anspruch 6, **dadurch gekennzeichnet, dass** sie Mittel zur telematischen Übermittlung (It, T) aufweist, um die numerische Datei (2) dem Zentrum zur Herstellung der Prothese (5) und/oder der Vorrichtung "Hauptmodell" (4) zu übermitteln.

8. Apparatearchitektur nach Anspruch 7, **dadurch gekennzeichnet, dass** sie außerdem, in dem Herstellungszentrum (LPD) der Prothese (5) und/oder der Vorrichtung "Hauptmodell" (4), ein System zur Bearbeitung numerischer Daten mittels abgelegter bzw. gespeicherter Programme (3), die bestimmt sind, um die numerische Datei (2) zu erhalten und um bestimmte Befehle für wenigstens eine Werkzeugmaschine zu erzeugen, aufweist, wobei die Befehle durch das Zusammenwirken der numerischen Daten (2) und wenigstens eines bestimmten Programms erzeugt werden, das in dem System zur Bearbeitung der Daten mittels abgelegter bzw. gespeicherter Programme (3) abgelegt bzw. gespeichert ist.

9. Apparatearchitektur nach Anspruch 8, **dadurch gekennzeichnet, dass** sie wenigstens zwei Werkzeugmaschinen aufweist, wobei eine erste Werkzeugmaschine (4) für die Herstellung des "Hauptmodells" bestimmt ist und eine zweite Werkzeugmaschine (5) für die Herstellung der Prothese bestimmt ist.
